Europäisches Patentamt

European Patent Office

Office européen des brevets

(19)

(11) Veröffentlichungsnummer: **0 190 601**
**B1**

(12)

# EUROPÄISCHE PATENTSCHRIFT

(45) Veröffentlichungstag der Patentschrift:
**26.10.88**

(21) Anmeldenummer: **86100748.2**

(22) Anmeldetag: **21.01.86**

(51) Int. Cl.⁴: **A 61 B 17/22**, G 08 B 19/00

(54) Sicherheitseinrichtung für einen Stosswellengenerator.

(30) Priorität: **04.02.85 DE 3503688**

(43) Veröffentlichungstag der Anmeldung:
**13.08.86 Patentblatt 86/33**

(45) Bekanntmachung des Hinweises auf die Patenterteilung:
**26.10.88 Patentblatt 88/43**

(84) Benannte Vertragsstaaten:
**AT DE FR GB NL**

(56) Entgegenhaltungen:
EP - A - 0 082 508
EP - A - 0 148 653
DE - A - 2 722 252
DE - A - 3 118 502
DE - A - 3 312 014
FR - A - 2 427 652
FR - A - 2 468 527
GB - A - 1 003 985
GB - A - 1 496 137
US - A - 2 937 640
US - A - 3 489 241
US - A - 4 390 026

(73) Patentinhaber: **Siemens Aktiengesellschaft Berlin und München, Wittelsbacherplatz 2, D-8000 München 2 (DE)**

(72) Erfinder: **Reichenberger, Helmut, Dr., Begonienstrasse 28, D-8501 Eckental (DE)**

## Beschreibung

Die Erfindung betrifft einen Stosswellengenerator zur Erzeugung von Stosswellen zur berührungsfreien Zertrümmerung von Konkrementen im Körper eines Lebewesens, mit einem Kondensator, der zur Entladung vorgesehen ist, und mit einer Ladeeinrichtung für den Kondensator.

Stosswellengeneratoren haben in jüngerer Zeit in der medizinischen Technik verbreitet Interesse gefunden. Mit ihnen können z.B. Nierensteine ohne operativen Eingriff im Patienten zerstört werden.

Ein Stosswellengenerator der eingangs genannten Art ist in der DE-A-33 12 01 in Form eines Stosswellenrohrs beschrieben. Dort ist eine Flachspule vorgesehen, die konkav gekrümmt ist und im Zusammenwirken mit einer Membran eine fokussierende Stosswelle erzeugt. Die Stosswellen werden dadurch ausgelöst, dass ein Kondensator über eine Funkenstrecke in die Flachspule entladen wird. Es sind jedoch keine Massnahmen beschrieben, um die Funktionsfähigkeit des Stosswellengenerators kontinuierlich zu überwachen.

Eine solche Überwachung und gegebenenfalls das Einleiten von Sicherheitsmassnahmen ist vor allem deswegen sinnvoll, um den Patienten vor möglichen Schädigungen aufgrund einer Änderung der Feldgeometrie oder eines zu hohen Druckes der Stosswelle zu bewahren. Hinzu kommt, dass durch eine kontinuierliche Überwachung auftretende Mängel am Stosswellengenerator frühzeitig erkannt und somit grössere Schäden vermieden werden können.

Aufgabe vorliegender Erfindung ist es, einen Stosswellengenerator der eingangs genannten Art so auszubilden, dass eine Veränderung seiner charakteristischen Werte frühzeitig erkannt wird.

Diese Aufgabe wird nach einer ersten Ausführungsform erfindungsgemäss gelöst durch eine Sicherheitseinrichtung, die einen Komparator umfasst, welcher einen Messwert, der aus dem zeitlichen Verlauf des elektrischen Stromes bei einer Entladung des Kondensators abgeleitet ist, mit einem vorgegebenen Referenzwert vergleicht und in Abhängigkeit des Vergleichs ein Alarmsignal zur Auslösung einer Sicherheitsmassnahme abgibt.

Nach einer zweiten Ausführungsform wird diese Aufgabe erfindungsgemäss gelöst durch eine Sicherheitseinrichtung, die einen im Verlauf des Weges der Stosswellen angeordneten Druckaufnehmer und einen Komparator umfasst, welcher einen Messwert, der aus dem zeitlichen Verlauf des Druckes abgeleitet ist, mit einem vorgegebenen Referenzwert vergleicht und in Abhängigkeit des Vergleichs ein Alarmsignal zur Auslösung einer Sicherheitsmassnahme abgibt.

Mit Hilfe der ersten Ausführungsform kann beispielsweise erkannt werden, ob der Zustand der elektrischen Kontakte der Funkenstrecke, über die der Kondensator entladen wird, noch zufriedenstellend ist. Bei Vorhandensein einer elektrischen Spule, die in Verbindung mit einer Membran die Stosswellen erzeugt, kann diese auf Windungskurzschlüsse überwacht werden. Es ist auch möglich, ein Eindringen von Feuchtigkeit in den Raum zwischen Primärspule und einer davor gelagerten Membran zu überwachen. Ferner können Deformationen der Membran oder weitere Störungen rechtzeitig erkannt werden. Auf diese Weise können aufwendige Folgeschäden vermieden werden.

Die zweite Ausführungsform bietet darüber hinaus noch den Vorteil, dass sich der Verschleiss einer nachgeordneten Fokussierungseinrichtung und eine Gasansammlung auf der Laufstrecke der Stosswellen erkennen lässt. Steht der als Stosswellenrohr ausgeführte Stosswellengenerator beispielsweise senkrecht und sammelt sich Gas unter einer eventuell vorhandenen Fokussierungslinse, so lässt sich dieses aus den Messwerten des Druckers erkennen.

Weitere Vorteile der Erfindung ergaben sich aus der Beschreibung einer Figur in Verbindung mit den Unteransprüchen.

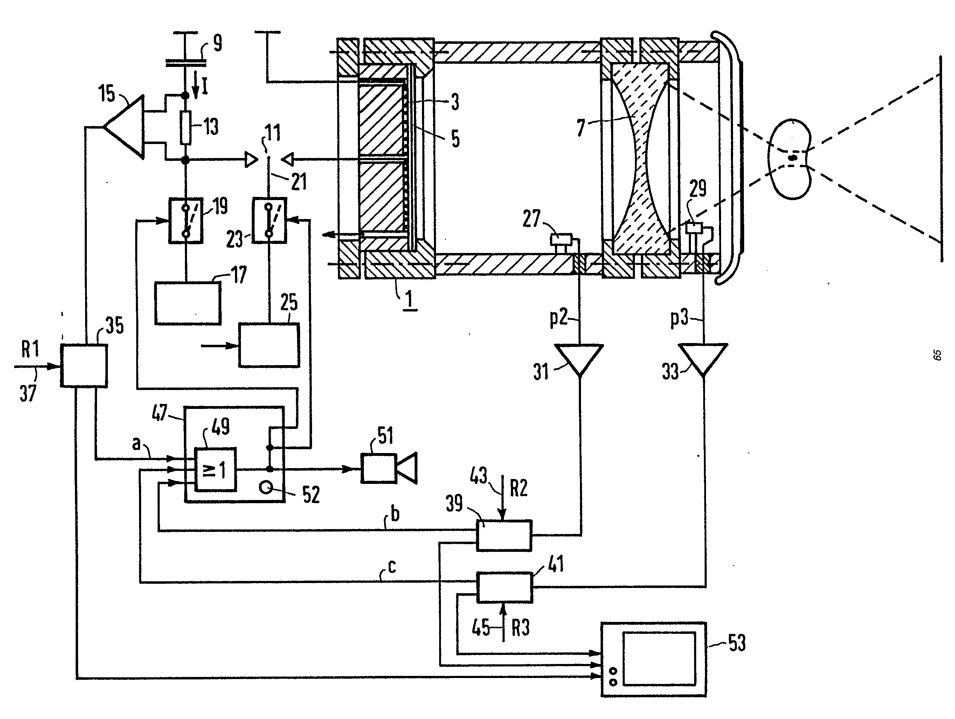

Die Figur zeigt einen Stosswellengenerator 1 mit zugeordneter Sicherheitseinrichtung. Der Stosswellengenerator 1 ist dabei als bekanntes Stosswellenrohr ausgeführt. Er umfasst als wesentliche Komponenten eine flache Primärspule 3, eine Sekundärmembran 5 und hier gesondert auch eine Linse, die als Fokussierungseinrichtung 7 dient. Ein Kondensator 9 wird bei Auslösung einer Funkenstrecke 11 über diese in die Primärspule 3 entladen. Die Entladung erfolgt über einen Messwiderstand 13, an welchem ein erster Verstärker 15 angeschlossen ist. Der Entladestrom ist mit I bezeichnet. Der Kondensator 9 wird über eine Ladeeinrichtung 17 nachgeladen. Die Verbindung zwischen dem Kondensator 9 und der Ladeeinrichtung 17 kann mit Hilfe eines ersten Schalters 19 unterbrochen werden. Die Funkenstrecke 11 besitzt eine Hilfselektrode 21, welche über einen zweiten Schalter 23 an ein Auslösegerät 25 angeschlossen ist. Mit dem Auslösegerät 25 ist eine Einzelauslösung von Stosswellen, eine periodische Folge von Auslösungen von Stosswellen möglich. Die Auslösung kann mittels des zweiten Schalters 23 unterbrochen werden.

Im Verlauf des Schallweges der Stosswelle sind ein erster Druckaufnehmer 27 vor und ein zweiter Druckaufnehmer 29 hinter der Fokussiereinrichtung 7 angeordnet Die Druckaufnehmer 27, 29 sind vorzugsweise so angeordnet, dass sie die Ausbreitung der Stosswelle nicht merklich beeinflussen, also seitlich. Als Druckaufnehmer 27, 29 kommen vorzugsweise Sensoren auf der Basis piezoelektrischer Polymere, wie z.B. PVDF, oder Keramik, in Frage. Es sind auch schon Versuche mit piezoresistiven Membransensoren erfolgt. Die Druckaufnehmer 27, 29 sind an einen zweiten Verstärker 31 bzw. einen dritten Verstärker 33 angeschlossen und geben Druckmesswerte $p2$ bzw. $p3$ ab.

Der Ausgang des ersten Verstärkers 15 ist zum ersten Eingang eines ersten Komparators 35 geführt. Der erste Komparator 35 besitzt einen zweiten Eingang 37, über den ein Referenzwertverlauf R1 des erwarteten Stromes I bei einer Kondensatorenladung eingegeben wird. Dieser erwartete Referenzwertverlauf R1 wird mit dem aktuellen Verlauf nach jeder Kondensatorentladung verglichen. Zum Vergleich werden charakteristische Grössen des Entladestroms I, wie z.B. die Amplitude, die Periode oder die Dämpfung des Stromverlaufs herangezogen. Sind die verglichenen Werte um mehr als eine vorgegebene Differenz verschieden, so wird am Ausgang des ersten Komparators 35 ein Alarmsignal a abgegeben.

Analog hierzu sind der zweite und dritte Verstärker 31 bzw. 33 ausgangsseitig mit einem zweiten und dirtten Komparator 39 bzw. 41 verbunden. Der zweite und dritte Komparator 39, 41 besitzt jeweils einen zweiten Eingang 43 bzw. 45, über den Referenzwertverläufe R2 bzw. R3 des erwarteten Druckes der Stosswelle eingegeben sind. Diese Referenzwertverläufe R2, R3 werden an der Stelle der Wegstrecke, wo der erste bzw. der zweite Druckaufnehmer 27 bzw. 29 plaziert ist, erwartet.

Diese erwarteten Referenzwertverläufe R2, R3 werden mit dem aktuellen Verlauf nach jeder Stosswellenauslösung verglichen. Zum Vergleich werden charakteristische Grössen des Druckverlaufs $\rho2$, $\rho3$, wie z.B. die Amplitude, die Anstiegszeit oder die Abklingzeit herangezogen. Sind die verglichenen Werte um mehr als eine vorgegebene Differenz verschieden, so wird am Ausgang des zweiten Komparators 39 ein Alarmsignal b abgegeben bzw. am dritten Komparator 41 ein Alarmsignal c abgegeben.

Die Ausgänge der drei Komparatoren 35, 39, 41 sind an den Eingang einer Logikschaltung 47 gelegt. Die Logikschaltung 47 enthält beispielsweise ein ODER-Gatter 49, welches bei Anliegen eines Eingangssignals über das weitergeleitete Signal (Steuersignal) den ersten Schalter 19 und den zweiten Schalter 23 öffnet. Durch das Öffnen wird sowohl das Nachladen des Kondensators 9 als auch die Möglichkeit zur Zündung der Funkenstrecke 11 noch vor Auslösen der nächsten Stosswelle unterbunden. Der Stosswellengenerator 1 ist also ausser Betrieb genommen. Es lassen sich auch Kriterien einführen, nach denen in einem Störungsfall nur der zweite Schalter 23 geöfent wird. Die Logikschaltung 47 ist auch mit einem Alarmgeber 51 verbunden, der den Betreiber optisch und/oder akustisch darauf aufmerksam macht, dass ein unregelmässiger Betriebszustand vorliegt. An der Logikschaltung 47 kann von (nicht gezeigten) Anzeigeeinrichtungen abgelesen werden, welcher Sicherheitskreis die Alarmmeldung a, b oder c veranlasste. Der normale Betriebszustand kann durch Betätigen eines Quittierschalters 52, der z.B. ein Drucktaster sein kann, wieder hergestellt werden.

Es ist auch vorgesehen, die Komparatoren 35, 39, 41 ausgangsseitig an einen Bildschirm 53, z.B. eines Speicheroszilloskops, anzuschliessen, auf welchem im Falle eines Alarms der zuletzt gemessene Verlauf des Entladestroms I und/oder der Druckwelle $\rho2$, $\rho3$ dargestellt wird.

Anhand eines beispielsweise angenommenen Fehlerfalls, nämlich einer Verminderung der Isolation zwischen zwei Spulengängen der Primärspule 3, soll nochmals die Arbeitsweise der Sicherheitseinrichtung dargelegt werden. Eine Beschädigung der Isolation zwischen den Spulengängen bringt eine Verringerung der Spuleninduktivität mit sich. Als Folge davon wird der Entladestrom I eine verkürzte Periode aufweisen.

Über den Messwiderstand 13 und den ersten Verstärker 15 wird dieser Verlauf des Ladestroms I mit anomaler Periode auf den ersten Eingang des ersten Komparators 35 gegeben. Der erste Komparator 35 stellt durch direkten Vergleich mit dem Referenzwert R1 also der Periode bei unbeschädigter Spule 3 fest, dass der letzte Stromverlauf anomal gewesen ist. Der erste Komparator 35 gibt daraufhin ein Alarmsignal a an die Logikschaltung 47, woraufhin der zweite Schalter 23 geöffnet wird, so dass keine weitere Kondensatorentladung mehr stattfinden kann. Auch wird über den Schalter 23 jedes weitere Triggersignal am Weitergang zur Triggerelektrode gehindert. Gleichzeitig wird der Alarmgeber 51 aktiviert, um den Betreiber des Stosswellengenerators 1 auf diesen anomalen Betriebszustand aufmerksam zu machen. Der Betreiber besitzt dann die Möglichkeit am Bildschirm 53 die zuletzt gemessene Entladekurve I darzustellen. Er erkennt daraus, dass eine Verkürzung der Periode eingetreten ist, welches ihm den Rückschluss ermöglicht, dass der Fehler im LC-Kreis des Stosswellengenerators 1 liegen muss. Er braucht seine Fehlersuche also nicht auf die Funkenstrecke 11 auszudehnen, da eine Veränderung des Elektrodenabstandes, ein Elektrodenabbrand oder geänderte Zündbedingungen hauptsächlich auf die Amplitude der Stromentladung Einfluss nehmen.

Durch die Überwachung des Stromkreises lassen sich in erster Linie eine Verschlechterung der elektrischen Kontakte der Funkenstrecke 11 sowie eine Deformation der Sekundärmembran 5, Windungskurzschlüsse in der Primärspule 3 und ein Eindringen von Feuchtigkeit in den Raum zwischen Primärspule 3 und Sekundärmembran 5 feststellen. Die Überwachung des Druckwellenverlaufs mit Hilfe der Druckaufnehmer 27, 29 bietet die Möglichkeit, Windungsschlüsse in der Primärspule 3, eine Deformation der Sekundärmembran 5, eine Verschleiss der Fokussiereinrichtung 7 und mögliche Gasansammlungen an der Fokussiereinrichtung 7 oder vor der Sekundärmembran 5 zu ermitteln.

Bei einer unzureichenden Funktion des Stosswellengenerators 1 bezüglich seiner Fokussierung würde der Therapieerfolg ausbleiben. Bei einer Überfunktion, d.h. bei zu hohen Drücken der Stosswelle oder einer Änderung der Feldgeometrie und damit verbundenen Änderungen der Fokuslage, würde die Gefahr einer Schädigung des Patienten bestehen. Die beschriebenen Sicherheitsmassnahmen ermöglichen eine frühzeitige Erkennung solcher Störungen, so dass aufwendige Folgeschäden am Stosswellenrohr 1 vermieden werden können.

## Patentansprüche

1. Stosswellengenerator (1) zur Erzeugung von Stosswellen zur berührungsfreien Zertrümmerung von Konkrementen im Körper eines Lebewesens, mit einem Kondensator (9), der zur Entladung vorgesehen ist und mit einer Ladeeinrichtung (17) für den Kondensator, gekennzeichnet durch eine Sicherheitseinrichtung (13, 15, 35, 47, 17, 23, 51), die einen Komparator (35) umfasst, welcher einen Messwert, der aus dem zeitlichen Verlauf des elektrischen Stromes (I) bei einer Entladung des Kondensators (9) abgeleitet ist, mit einem vorgegebenen Referenzwert (R1) vergleicht und in Abhängigkeit des Vergleichs ein Alarmsignal (a) zur Auslösung einer Sicherheitsmassnahme abgibt.

2. Stosswellengenerator (1) zur Erzeugung von Stosswellen zur berührungsfreien Zertrümmerung von Konkrementen im Körper eines Lebewesens, mit einem Kondensator (9), der zur Entladung vorgesehen ist und mit einer Ladeeinrichtung (17) für den Kondensator, gekennzeichnet durch eine Sicherheitseinrichtung (27, 29, 39, 41, 17, 23, 51), die einen im Verlauf des Weges der Stosswellen angeordneten Druckaufnehmer (27, 29) und einen Komparator (39, 41) umfasst, welcher einen Messwert (p2, p3), der aus dem zeitlichen Verlauf des Druckes (p2, p3) abgeleitet ist, mit einem vorgegebenen Referenzwert (R2, R3) vergleicht und in Abhängigkeit des Vergleichs ein Alarmsignal (b, c) zur Auslösung einer Sicherheitsmassnahme abgibt.

3. Stosswellengenerator nach Anspruch 1, dadurch gekennzeichnet, dass als Messwert für den Vergleich die Amplitude, die Periode oder die Dämpfung des Stromverlaufs (I) herangezogen wird.

4. Stosswellengenerator nach Anspruch 2, dadurch gekennzeichnet, dass als Messwert für den Vergleich die Amplitude, die Periode oder die Dämpfung des Druckverlaufs (p2, p3) herangezogen wird.

5. Stosswellengenerator nach einem der Ansprüche 1 bis 4, dadurch gekennzeichnet, dass das Alarmsignal (a, b, c) vor der nächsten Aufladung des Kondensators (9) abgegeben wird.

6. Stosswellengenerator nach einem der Ansprüche 1 bis 5, dadurch gekennzeichnet, dass das Alarmsignal (a, b, c) zur elektrischen Trennung des Kondensators (9) von der Ladeeinrichtung (17) vorgesehen ist.

7. Stosswellengenerator nach einem der Ansprüche 1 bis 7, dadurch gekennzeichnet, dass das Alarmsignal (a, b, c) zur Abgabe eines optischen und/oder akustischen Alarms vorgesehen ist.

8. Stosswellengenerator nach einem der Ansprüche 1 bis 7, dadurch gekennzeichnet, dass das Alarmsignal (a, b, c) zur Blockierung der Auslösung der nächsten Stosswelle vorgesehen ist.

9. Stosswellengenerator nach einem der Ansprüche 1 bis 8, dadurch gekennzeichnet, dass das Alarmsignal (a, b, c) zur Betätigung eines Schalters (19, 23) vorgesehen ist.

10. Stosswellengenerator nach einem der Ansprüche 1 bis 9, dadurch gekennzeichnet, dass zur Darstellung des Messwertes ein Bildschirm (53) vorgesehen ist.

11. Stosswellengenerator nach einem der Ansprüche 2 oder 4 bis 10, mit einer Fokussierungseinrichtung, dadurch gekennzeichnet, dass der Druckaufnehmer (27) vor und ein weiterer Druckaufnehmer (29) hinter der Fokussierungseinrichtung (7) angeordnet ist.

12. Stosswellengenerator nach einem der Ansprüche 1, 3 oder 5 bis 10, dadurch gekennzeichnet, dass zur Messung des zeitlichen Verlaufs des elektrischen Stromes (I) ein Messwiderstand (13) mit dem Kondensator (9) in Reihe geschaltet ist.

13. Stosswellengenerator nach einem der Ansprüche 1 bis 12, dadurch gekennzeichnet, dass er als Stosswellenrohr ausgebildet ist.

## Revendications

1. Générateur à ondes de choc (1) destiné à produire des ondes de choc pour la destruction sans contact de concrétions dans le corps d'un être vivant, comprenant un condensateur (9), prévu pour être déchargé, ainsi qu'un chargeur (17) pour le condensateur, caractérisé par un dispositif de sécurité (13, 15, 35, 47, 17, 23, 51) comprenant un comparateur (35) qui compare une valeur mesurée, tirée de la variation dans le temps du courant électrique (I) lors d'une décharge du condensateur (9), avec une valeur de référence (R1) préfixée et qui, en fonction de la comparasion, délivre un signal d'alarme (a) pour provoquer une mesure de sécurité.

2. Générateur à ondes de choc (1) destiné à produire des ondes de choc pour la destruction sans contact de concrétions dans le corps d'un être vivant, comprenant un condensateur (9), prévu pour être déchargé, ainsi qu'un chargeur (17) pour le condensateur, caractérisé par un dispositif de sécurité (27, 29, 39, 41, 17, 23, 51) comprenant un capteur de pression (27, 29) monté dans le trajet des ondes de choc et un comparateur (39, 41) qui compare une valeur mesurée (p2, p3), tirée de la variation dans le temps de la pression (p2, p3), avec une valeur de référence (R2, R3) préfixée et qui, en fonction de la comparaison, délivre un signal d'alarme (b, c) pour provoquer une mesure de sécurité.

3. Générateur selon la revendication 1, caractérisé en ce que l'amplitude, la période ou l'amortissement de la variation du courant (I) est utilisé en tant que valeur mesurée pour la comparaison.

4. Générateur selon la revendication 2, caractérisé en ce que l'amplitude, la période ou l'amortissement de la variation de pression (p2, p3) est utilisé en tant que valeur mesurée pour la comparaison.

5. Générateur selon une des revendications 1 à 4, caractérisé en ce que le signal d'alarme (a, b, c) est délivré avant la charge suivante du condensateur (9).

6. Générateur selon une des revendications 1 à 5, caractérisé en ce que le signal d'alarme (a, b, c) est prévu pour séparer le condensateur (9) électriquement du chargeur (17).

7. Générateur selon une des revendications 1 à 6, caractérisé en ce que le signal d'alarme (a, b, c) est prévu pour la délivrance d'une alarme optique et/ou acoustique.

8. Générateur selon une des revendications 1 à 7, caractérisé en ce que le signal d'alarme (a, b, c) est prévu pour bloquer le déclenchement de l'onde de choc suivante.

9. Générateur selon une des revendications 1 à 8, caractérisé en ce que le signal d'alarme (a, b, c) est prévu pour la manoeuvre d'un interrupteur (19, 23).

10. Générateur selon une des revendications 1 à 9, caractérisé en ce qu'un écran (53) est prévu pour visualiser la valeur mesurée.

11. Générateur selon une des revendications 2 et 4 à 10, comprenant un dispositif de focalisation, caractérisé en ce que le capteur de pression (27) est monté en amont du dispositif de focalisation (7) et qu'un capteur de pression (29) supplémentaire est monté en aval de ce dispositif.

12. Générateur selon une des revendications 1, 3 et 5 à 10, caractérisé en ce qu'une résistance de mesure (13) est connectée en série ave le condensateur (9) pour la mesure de la variation dans le temps du courant électrique (I).

13. Générateur selon une des revendications 1 à 12, caractérisé en ce qu'il est réalisé comme un tube à ondes de choc.

## Claims

1. A shock wave generator (1) for producing shock waves for contactless shattering of concretions in the body of a living being, having a capacitor (9) which is intended to be discharged and a device (17) for charging the capacitor, characterised by a safety device (13, 15, 35, 47, 17, 23, 51) that comprises a comparator (35) which compares a measured value derived from the time characteristic of the electric current (I) in a discharge of the capacitor (9) with a predetermined reference value (R1) and depending on the comparison, gives an alarm signal (a) for initiating a afety measure.

2. A shock wave generator (1) for producing shock waves for contactless shattering of concretions in the body of a living being, having a capacitor (9) which is intended to be discharged and a device (17) for charging the capacitor, characterised by a safety device (13, 15, 35, 47, 17, 23, 51) that comprises a pressure sensor (27, 29) arranged in the path of the shock waves and a comparator (39, 41) which compares a measured value ($\rho2$, $\rho3$) derived from the time characteristic of the pressure ($\rho2$, $\rho3$) with a predetermined reference value (R2, R3) and, depending on the comparison, gives an alarm signal (b, c) for initiating a safety measure.

3. A shock wave generator according to claim 1, characterised in that the amplitude, the period or the attenuation of the current characteristic (I) is employed as the measured value for the comparison.

4. A shock wave generator according to claim 2, characterised in that the amplitude, the period or the attenaution of the pressure characteristic ($\rho2$, $\rho3$) is employed as the measured value for the comparison.

5. A shock wave generator according to any one of claims 1 to 4, characterised in that the alarm signal (a, b, c) is given before the next charging of the capacitor (9).

6. A shock wave generator according to any one of claims 1 to 5, characterised in that the alarm signal (a, b, c) is intended for electrical separation of the capacitor (9) from the charging device (17).

7. A shock wave generator according to any one of claims 1 to 7, characterised in that the alarm signal (a, b, c) is intended to give an optical and/or acoustic alarm.

8. A shock wave generator according to any one of claims 1 to 7, characterised in that the alarm signal (a, b, c) is intended to block the initiation of the next shock wave.

9. A shock wave generator according to any one of claims 1 to 8, characterised in that the alarm signal (a, b, c) is intended to operate a switch (19, 23).

10. A shock wave generator according to any one of claims 1 to 9, characterised in that a screen (53) is provided to show the measured value.

11. A shock wave generator according to claim 2 or any one of claims 4 to 10, having a focusing device, characterised in that the pressure sensor (27) is arranged in front of, and a further pressure sensor (29) behind, the focussing device (7).

12. A shock wave generator according to any one of claims 1, 3 and 5 to 9, characterised in that a measuring resistor (13) is connected in series with the capacitor (9) to measure the time characteristic of the electric current (I).

13. A shock wave generator according to any one of claims 1 to 12, characterised in that it is in the form of a shock wave tube.